Europäisches Patentamt

European Patent Office

Office européen des brevets

(11) Numéro de publication: **0 345 401**
**A1**

(12) **DEMANDE DE BREVET EUROPEEN**

(21) Numéro de dépôt: 88401413.5

(51) Int. Cl.⁴: **A01K 87/04**

(22) Date de dépôt: **09.06.88**

(43) Date de publication de la demande:
**13.12.89 Bulletin 89/50**

(84) Etats contractants désignés:
**ES**

(71) Demandeur: **SOCIETE D'EXPLOITATION DES ETABLISSEMENTS PLATEAU SODEX SOCIETE ANONYME**
**Frimont**
**F-33190 La Reole(FR)**

(72) Inventeur: **Lavabre, Xavier**
**Les Causses Lacourt Saint Pierre**
**F-82290 La Villedieu du Temple(FR)**

(74) Mandataire: **Barre, Philippe**
**Cabinet Barre, Gatti, Laforgue 95, rue des Amidonniers**
**F-31069 Toulouse Cedex(FR)**

(54) **Dispositif pour la fixation amovible d'un anneau guide-fil sur un brin de canne à pêche.**

(57) L'invention concerne un dispositif pour la fixation, à l'extrémité d'un brin (1) de canne à pêche, d'un anneau guide-fil (12) amovible adapté pour être assujetti sur ce brin au moyen de deux branches (15) reliées au niveau d'une de leur extrémité par un pied (13). Ce dispositif comprend, en premier lieu, un embout (2) doté d'une jupe d'assemblage (3) sur l'extrémité du brin (1), d'un fût (5) dans le prolongement de la jupe (3), et d'un nez d'embout (7) séparé du fût (5) par une gorge annulaire (6). Il comprend également une bague porte-anneau (8) constituée d'un manchon creux de diamètre intérieur conjugué du diamètre extérieur du fût (5) et comportant un logement longitudinal (11) de forme conjuguée à celle du pied (13) de l'anneau (12). Il comprend, enfin, un circlips de blocage (16) doté d'un tenon d'encliquetage (17) adapté pour se loger entre les deux branches (15) de l'anneau (12), de façon à bloquer le pied (13) de ce dernier dans le logement (11) de la bague (8).

Fig.1

## DISPOSITIF POUR LA FIXATION AMOVIBLE D'UN ANNEAU GUIDE-FIL SUR UN BRIN DE CANNE A PECHE

L'invention concerne un dispositif pour la fixation, à l'extrémité d'un brin de canne à pêche, notamment une canne télescopique, d'un accessoire tel qu'un anneau guide-fil, nécessitant un montage rigide et un caractère amovible.

Le guidage du fil des cannes à pêche à fil extérieur est assuré par des anneaux fixés sur les brins de la canne. Les anneaux traditionnels sont dotés d'un jambage prolongé par un pied que l'on vient ligaturer sur le brin de la canne. Toutefois, cette technique rend peu pratique les opérations de pose et de dépose des anneaux, puisqu'elle oblige, pour chacune de ces opérations, à sectionner les liens de fixation de l'anneau, puis à ligaturer, à nouveau, le pied de cet anneau sur le brin : ceci constitue un inconvénient notable à l'occasion des changements d'anneaux, suite par exemple, à leur détérioration, ou des démontages de la canne qui nécessitent le retrait de ces anneaux.

Pour tenter de pallier ces inconvénients, il a été associé à ces anneaux une bague support venant se coller ou se visser autour des brins. Toutefois, dans le premier cas, tout démontage nécessite de décoller puis recoller la bague. De plus, il est impossible de parvenir à un bon compromis entre un collage efficace qui rendrait difficiles les démontages de la bague et un collage précaire qui déterminerait des décollages fréquents. Dans le deuxième cas, du fait des faibles épaisseurs des bagues et des brins des cannes, les filets sont obligatoirement très fins et présentent donc des risques notables de détérioration.

Une autre solution consiste à utiliser des bagues fendues venant se loger, par le jeu de leur élasticité radiale dans des gorges ménagées sur les brins. Toutefois, en raison des efforts transmis par le fil aux anneaux, il arrive fréquemment que les bagues s'ouvrent provoquant le détachement de l'anneau correspondant.

Tous ces problèmes ont été résolus par la mise au point des dispositifs de fixation amovibles tels que décrits dans le brevet français n° 70.30195 et le certificat d'addition n° 74.08718. Ces dispositifs comprennent, en premier lieu, un embout destiné à être monté à l'extrémité et dans le prolongement d'un brin, et pouvant, de surcroît, faire office de bouchon réducteur pour des cannes à longueur réglable. Cet embout est doté d'une rainure transversale périphérique ménagée en arrière d'un cordon périphérique prévu sur le nez de ce dernier. Cette rainure est aménagée pour servir de logement à une bague de ceinturage équipée d'un anneau de guidage d'un seul tenant avec cette bague. Le blocage ou le déblocage de la bague dans sa rainure peut être obtenu de deux manières.

Une première solution consiste à prévoir une bague en un matériau élastique et un nez d'embout formant une rampe conique d'accès de diamètre extérieur supérieur au diamètre extérieur de la rainure. Cette rampe assure ainsi la dilatation à force de la bague pendant son introduction sur l'embout, puis le blocage de cette bague, une fois celle-ci rétractée et positionnée dans la rainure. Le retrait de la bague est également facilité par un chanfrein ménagé sur le bord avant de la rainure.

La deuxième solution consiste à prévoir un cordon périphérique de diamètre au plus égal au diamètre intérieur de la bague et à celui du fond de la rainure, une gorge étant ménagée entre cette rainure et ce cordon périphérique. Le blocage de la bague dans la rainure est alors obtenu au moyen d'un circlips venant se loger dans la gorge. Cette deuxième solution présente l'avantage de permettre l'utilisation de bagues rigides faisant bien corps avec l'anneau et assurant une liaison rigide de ce dernier avec le brin qui le supporte.

Mise à part cette différence, on constate que les deux solutions proposées permettent de réaliser très aisément le montage ou le démontage de la bague porte-anneau, tout en garantissant un blocage rigide de cette dernière. Toutefois, comme pour les solutions précitées, ces dispositifs consistent à utiliser un élément d'un seul tenant intégrant la bague de ceinturage et l'anneau guide-fil. Tous les dispositifs ci-dessus décrits obligent donc, lors d'une détérioration de cet anneau à changer l'ensemble bague-anneau. Or, cet anneau forme, de par son positionnement en saillie sur les brins de la canne, l'élément de cette canne le plus vulnérable et le plus susceptible d'être détérioré. De plus, la bague de guidage équipée de son anneau constitue un élément nécessitant une fabrication spéciale et ne pourra être achetée que dans les seuls magasins spécialisés dépositaires du fabricant de cet élément.

La présente invention se propose de pallier ces inconvénients et de fournir un dispositif de fixation amovible d'un anneau, de type traditionnel, à l'extrémité d'un brin de canne à pêche, assurant une liaison rigide de cet anneau avec ce brin.

Un autre objectif est de permettre un montage ou un démontage très rapides et aisés de l'anneau sur le brin qui le supporte.

Un autre objectif est de fournir un dispositif de fixation permettant le démontage des brins de la canne.

Un autre objectif est de fournir un dispositif d'une grande fiabilité et présentant une grande sécurité d'emploi.

A cet effet, le dispositif pour la fixation amovible d'un anneau guide-fil, à l'extrémité d'un brin de canne à pêche est du type comprenant :
- un embout comportant une jupe d'assemblage sur l'extrémité du brin, un fût dans le prolongement de ladite jupe, un nez d'embout et une gorge annulaire ménagée entre lesdits fût et nez d'embout,
- une bague porte-anneau de diamètre intérieur conjugué du diamètre extérieur du fût,
- un circlips de blocage de diamètre extérieur supérieur au diamètre intérieur de la bague.

Selon la présente invention, ce dispositif se caractérise en ce que :
- l'anneau est un anneau amovible adapté pour être assujetti sur un brin au moyen de deux branches reliées au niveau d'une de leur extrémité par un pied apte à être fixé sur ledit brin,
- la bague porte-anneau est constituée d'un manchon creux comportant un logement longitudinal de forme conjuguée à celle du pied de l'anneau,
- le circlips de blocage comporte un tenon d'encliquetage adapté pour se loger entre les deux branches de l'anneau de façon à bloquer le pied de ce dernier dans le logement de la bague.

Ainsi, l'on constate que ce dispositif autorise un blocage rigide d'un anneau traditionnel de fabrication courante, tel qu'un anneau destiné à être ligaturé sur un brin de canne à pêche. En outre, les opérations de montage ou de démontage de cet anneau sont très rapides, celui-ci étant bloqué uniquement par l'intermédiaire du circlips. Par ailleurs, le démontage de la canne peut également être obtenu au moyen d'un manoeuvre simple consistant à retirer le circlips et a dégager la bague de l'embout.

Selon une autre caractéristique de l'invention, la bague porte-anneau est prévue en un matériau rigide, le nez de l'embout présentant un diamètre extérieur au plus égal au diamètre intérieur de cette bague. Ainsi, cette bague peut être emmanchée sur l'embout sans nécessiter de dilatation à force lors de son introduction. De plus, cette bague rigide fait bien corps avec le fût de l'embout et assure une liaison rigide de l'anneau avec le brin qui le supporte.

L'invention exposée ci-dessus dans sa forme générale sera mieux comprise à la lecture de la description détaillée qui suit et à l'examen des dessins annexés qui en représentent à titre d'exemple non limitatif un mode de réalisation préférentiel. Sur ces dessins qui font partie intégrante de la présente description :
- la figure 1 est une vue en perspective éclatée de l'extrémité d'un brin et des différents éléments prêts à être montés sur ce brin pour le guidage du fil,

- la figure 2 est une coupe par un plan longitudinal de l'extrémité de ce brin équipée du dispositif de fixation conforme à l'invention,
- la figure 3 est une vue en perspective partielle de trois brins, les deux brins de diamètre supérieur étant en position repliée et étant équipés de leur dispositif de fixation.

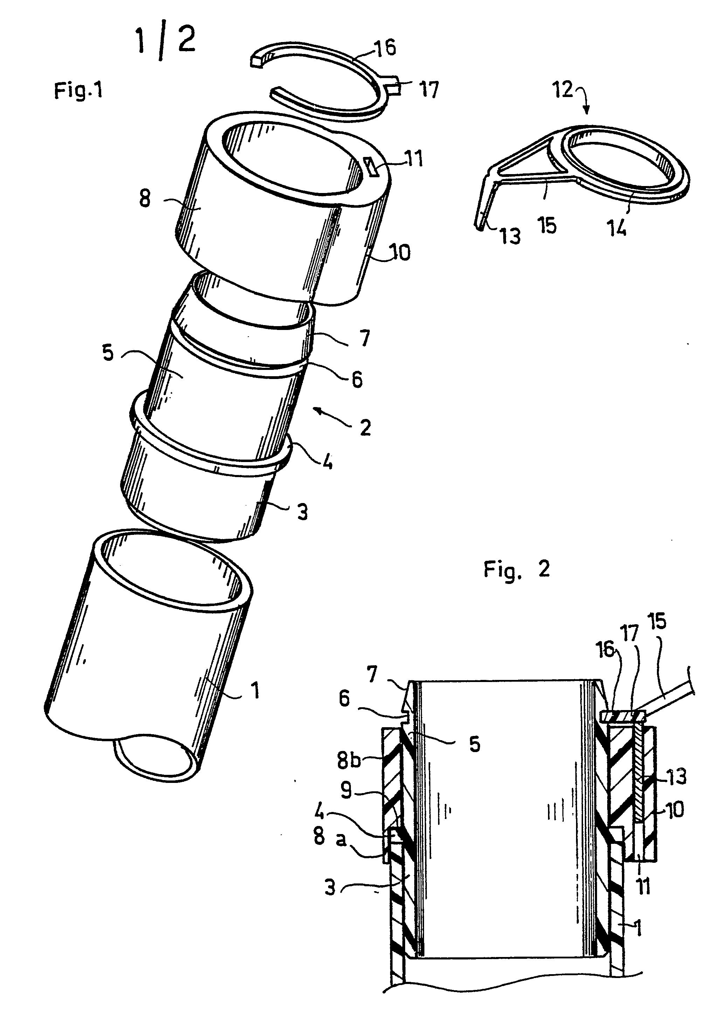

Le dispositif de fixation représenté aux figures 1 à 3 est destiné à permettre le montage, de façon amovible, d'un anneau de guidage de type traditionnel, sur l'extrémité des brins d'une canne à pêche à longueur réglable et donc équipée de bouchons réducteurs.

La figure 1 représente l'extrémité d'un brin 1 de canne à pêche réalisé en tout matériau classique connu en soi (métal, résine armée de fibre de verre...).

L'embout réducteur 2 tubulaire représenté au-dessus de ce brin est réalisé en une résine synthétique moulée. Il est doté d'une jupe d'assemblage 3 destinée à être emmanchée et collée à l'intérieur de l'extrémité du brin, comme représenté figure 2. Le diamètre intérieur de cette jupe 3 est déterminé de façon à permettre le guidage du brin de diamètre inférieur appelé à coulisser dans cet embout réducteur 2.

Cette jupe 3 est surmontée d'une collerette périphérique 4 de même diamètre extérieur que l'extrémité du brin 1 et destinée à venir en butée contre l'extrémité de ce brin 1 dans la position emmanchée de la jupe 3.

Dans le prolongement de la collerette 4, l'embout réducteur 2 comporte un fût 5 de diamètre inférieur au diamètre du brin 1 et sur lequel vient se positionner la bague porte-anneau représentée au-dessus de l'embout tubulaire.

Une gorge annulaire 6 est ménagée au-dessus du fût 5 et destinée à recevoir un circlips de blocage tel qu'on le versa ci-après.

L'embout tubulaire se termine, enfin, par un nez 7 de forme légèrement conique, présentant un diamètre extérieur au plus égal au diamètre extérieur du fût 5.

La bague porte-anneau 8 est une bague rigide, réalisée en une résine synthétique moulée. Elle présente la forme d'un manchon creux de diamètre extérieur supérieur au diamètre du brin 1 et doté, intérieurement d'un épaulement 9 déterminant deux tronçons de diamètre intérieur différent : un tronçon 8a de diamètre intérieur égal au diamètre du brin 1 et un tronçon 8b de diamètre intérieur égal au diamètre du fût 5.

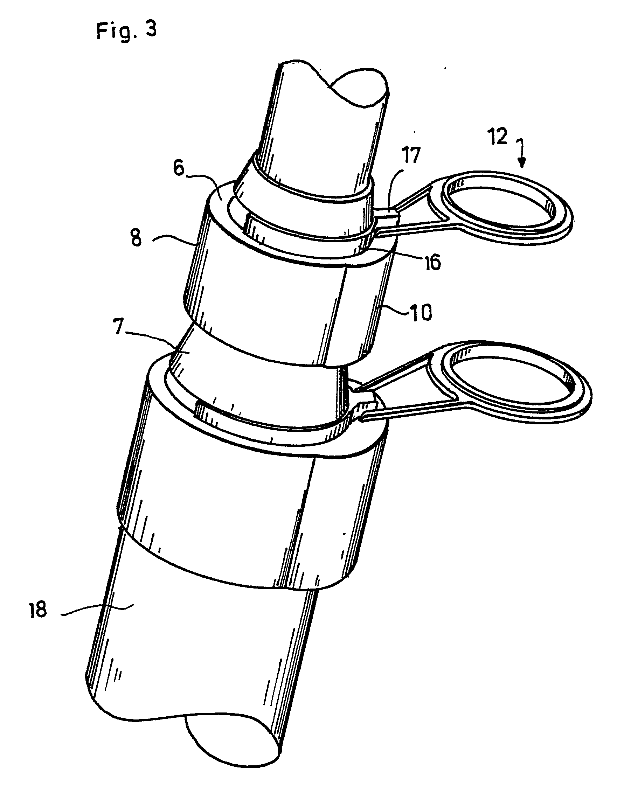

Ainsi, lors de sa mise en place, cette bague 8 coulisse sur le fût 5 jusqu'à ce que l'épaulement 9 vienne en butée contre la collerette 4. Ainsi positionné, le tronçon 8a de cette bague 8 est emboîté sur l'extrémité du brin 1 et fait office de butée pour le nez 7 de l'embout tubulaire 2 du brin de diamètre supérieur, tel que représenté figure 3.

La bague 8 comporte, en outre, une paroi périphérique présentant une surépaisseur 10. Au niveau de cette surépaisseur, cette bague 8 est dotée d'un logement longitudinal II, de forme conique.

Ce logement est destiné à recevoir le pied 13 d'un anneau de guidage 12 du type traditionnel, c'est-à-dire normalement destiné à être ligaturé sur un brin de canne à pêche. Cet anneau de guidage 12 présente, classiquement, l'anneau guide-fil 14, proprement dit, sur lequel sont solidarisées les extrémités libres de deux branches 15 présentant la forme d'un V. Le pied de fixation 13 présente, quant à lui, une forme trapézoïdale et s'étend dans le prolongement des branches 15, sensiblement orthogonalement à celles-ci.

Le dispositif de fixation de cet anneau 12 est enfin complété par un circlips de blocage 16 dont le diamètre intérieur est inférieur au diamètre du nez 7 de l'embout tubulaire 2 et correspond sensiblement à celui de la gorge 6.

Le diamètre extérieur de ce circlips 16 est supérieur au diamètre intérieur du tronçon 8b de la bague 8 de façon à bloquer en translation cette bague 8, lorsqu'elle est positionnée sur le fût 5.

Le circlips 16 comporte, en outre, un tenon d'encliquetage 17 adapté pour se positionner entre les branches 15 de l'anneau de guidage 12 de façon à bloquer le pied 13 dans son logement 11.

Le montage s'effectue de la façon suivante : la bague 8 est emmanchée sur l'embout tubulaire 2 jusqu'à ce que son épaulement intérieur 9 vienne en butée contre la collerette 4 de cet embout. Le nez 7 de l'embout étant de diamètre au plus égal au diamètre du fût 5, aucun élément ne gêne l'introduction de la bague 8.

On positionne ensuite le pied 13 de l'anneau dans le logement 11 de la bague 8.

Finalement, on emmanche le circlips 16 sur le nez conique 7 jusqu'à ce qu'il vienne s'engager dans la gorge 6 de l'embout 2 et de façon que le tenon d'encliquetage 17 se trouve positionné entre les branches 15 de l'anneau 12.

Au cours de cette opération, le circlips 16 se dilate légèrement et se rétracte après le passage du nez 7.

A cet effet, ce circlips est prévu en une matière relativement élastique et est ouvert de façon à permettre sa dilatation.

L'ensemble se présente alors tel que représenté figure 3. La bague 8 est fermement immobilisée, d'une part, sur le fût 5 et, d'autre part, entre la collerette 4 et le circlips 16. L'anneau est, de même, immobilisé, d'une part, grâce à la forme conique du logement il et, d'autre part, par le tenon d'encliquetage 17.

Lorsqu'on désire démonter l'anneau 12, il suffit de dégager le circlips 16. Si l'on désire également retirer la bague 8, il suffit de dégager cette dernière en la faisant coulisser sur l'embout tubulaire 2.

On réalise ainsi un montage absolument rigide de la bague 8 et de l'anneau 12, tout en permettant de démonter chacun de ces éléments à la faveur d'une manoeuvre simple. En outre, ce dispositif permet un montage rigide et un démontage rapide d'anneaux traditionnels, de faibles coûts et tels que montés sur les cannes classiques actuellement utilisées.

On notera enfin, en se reportant à la figure 3 que, de même que pour les dispositifs décrits dans le brevet français n° 70.30195 et le certificat d'addition n° 74.08718, la surface extérieure du raccordement entre les brins 1 et 18 est pratiquement lisse, ce qui permet de réaliser des cannes à pêche robustes et agréables à manipuler. En effet, seule la bague 8 fait saillie sur l'extrémité du brin 1, dans le but de servir de butée au brin 18 de diamètre supérieur.

## Revendications

1/ - Dispositif pour la fixation amovible d'un anneau guide-fil (12) à l'extrémité d'un brin (1) de canne à pêche, du type comprenant :
- un embout (2) comportant une jupe d'assemblage (3) sur l'extrémité du brin (1), un fût (5) dans le prolongement de ladite jupe, un nez d'embout (7) et une gorge annulaire (6) ménagée entre lesdits fût et nez d'embout,
- une bague (8) porte-anneau de diamètre intérieur conjugué du diamètre extérieur du fût (5),
- un circlips (16) de blocage de diamètre extérieur supérieur au diamètre intérieur de la bague (8), ledit dispositif étant caractérisé en ce que :
- l'anneau (12) est un anneau amovible adapté pour être assujetti sur un brin (1) au moyen de deux branches (15) reliées au niveau d'une de leur extrémité par un pied (13) apte à être fixé sur ledit brin,
- la bague porte-anneau (8) est constituée d'un manchon creux comportant un logement (11) longitudinal de forme conjuguée à celle du pied (13) de l'anneau (12),
- le circlips de blocage (16) comporte un tenon d'encliquetage (17) adapté pour se loger entre les deux branches (15) de l'anneau (12) de façon à bloquer le pied (13) de ce dernier dans le logement (11) de la bague (8).

2/ - Dispositif selon la revendication 1, dans lequel le pied (13) de l'anneau (12) présente une forme trapézoïdale, caractérisé en ce que le logement (11) de la bague (8) présente une forme conique conjuguée dudit pied d'anneau.

3/ - Dispositif selon l'une des revendications 1 ou 2, pour la fixation amovible d'anneaux guide-fil (12) à l'extrémité de brins (1, 18) de diamètres différents d'une canne télescopique, dans lequel la jupe d'assemblage (3) de chaque embout (2) est adaptée pour être emmanchée à l'intérieur de l'extrémité d'un brin (1, 18), ledit dispositif étant caractérisé en ce que chaque bague porte-anneau (8) présente un diamètre extérieur supérieur au diamètre extérieur du brin correspondant de façon à faire office de butée pour le nez (7) de l'embout (2) monté à l'extrémité d'un brin (18) de diamètre supérieur, dans la position repliée de la canne.

4/ - Dispositif selon l'une des revendications précédentes dans lequel la bague (8) est en un matériau rigide, le nez (7) de l'embout (2) présentant un diamètre extérieur au plus égal au diamètre intérieur de ladite bague.

1 / 2

Fig.1

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| D,A | FR-A-2263686 (DUPONT)<br>--- | | A01K87/04 |
| D,A | FR-A-2102702 (DUPONT)<br>--- | | |
| A | US-A-4277906 (NELLI)<br>----- | | |

| DOMAINES TECHNIQUES RECHERCHES (Int. Cl.4 ) |
|---|
| A01K |

Le présent rapport a été établi pour toutes les revendications

| Lieu de la recherche | Date d'achèvement de la recherche | Examinateur |
|---|---|---|
| LA HAYE | 11 JANVIER 1989 | VERDOODT S.J.M. |